(19) Europäisches Patentamt / European Patent Office / Office européen des brevets

(11) **EP 2 056 130 A1**

(12) **EUROPEAN PATENT APPLICATION**
published in accordance with Art. 153(4) EPC

(43) Date of publication:
**06.05.2009 Bulletin 2009/19**

(51) Int Cl.:
**G02B 1/11** (2006.01)   **B32B 7/02** (2006.01)
**G09F 9/00** (2006.01)

(21) Application number: **07806568.7**

(22) Date of filing: **27.08.2007**

(86) International application number:
**PCT/JP2007/067095**

(87) International publication number:
**WO 2008/023854 (28.02.2008 Gazette 2008/09)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.08.2006 JP 2006228905**

(71) Applicant: **Bridgestone Corporation Tokyo 104-0031 (JP)**

(72) Inventor: **SUZUKI, Yuji Yokohama-shi Kanagawa 244-8510 (JP)**

(74) Representative: **Whalley, Kevin Marks & Clerk 90 Long Acre London WC2E 9RA (GB)**

(54) **REFLECTION PREVENTING FILM FOR DISPLAY AND DISPLAY USING THE SAME**

(57)   An antireflection film for display comprising a transparent film 11, an adhesion layer 12 having antistatic property provided thereon, a hard coat layer 13 provided thereon and a low refractive index layer 14 provided thereon, wherein the hard coat layer has refractive index of not less than 1.67, the transparent film has refractive index ($R_1$), the adhesion layer has refractive index ($R_2$) and the hard coat layer has refractive index ($R_3$), the refractive indices ($R_1$), ($R_2$) and ($R_3$) satisfying the following formula (I):

$$\left| R_2 - (R_1 + R_3) / 2 \right| \leqq a \qquad (I),$$

in which "a" is real number of not more than 0.07.

## Fig. 1

**Description**

Background of Invention

1. Field of the invention

The present invention relates to an optical filter for display having antireflection function, which is used in an image displaying area of display such as plasma display panel.

2. Description of the Related Art

Displays such as flat-panel displays (e.g., liquid crystal display (LCD), plasma display panel (PDP), field emission display (FED) and surface-conduction electron-emitter display (SED), and EL display), and CRT display, are widely used as a display device. In recent years, image magnification has entered the mainstream of the displays, and PDP has been generalized as a next-generation device for image magnification.

The problem that an external light such as a fluorescent is reflected on a surface of the display to have difficult seeing visual information of the display has been known. Therefore, in conventional displays, an antireflection film for display having an antireflection layer is provided the image displaying area of the display.

As the antireflection film, for example, a transparent thin layer composed of metal oxide is used. Further, a multi-layered film, which is composed of plural transparent thin layers having different refractive index from each other, for example, formed by superposing plural refractive index layers on each other, is also used as the antireflection film.

In addition, when a surface of a display is scratched, the scratched surface is lowered in visibility, and hence the antireflection film has a hard coat layer for imparting hardness to the surface. Further, a surface of a display having dusts is also lowered in visibility, and hence the antireflection film is required to have antistatic property. Furthermore, since the antireflection film is required to high transparency in addition to the antistatic property, the antireflection film is intended to have enhanced antistatic property and high transparency at the same time by adding inorganic antistatic particles such as ITO or ATO to the antireflection layer.

Such antireflection film having a hard coat layer and an antireflection layer is generally prepared by superposing the hard coat layer and antireflection layer in this order on a transparent film through an adhesion layer.

With image magnification and flattening of panel, in recent years, cost reduction has been strongly demanded as well as improvement of antireflection property. For cost reduction, it is considered to develop an antireflection film having a hard coat layer and a low refractive index layer superposed in this order. To improve antireflection property in the structure of the above-mentioned antireflection film, it is necessary to enhance the refractive index of the hard coat layer. In this case, the hard coat layer is required to contain a great amount of inorganic antistatic particles having high refractive index. However, the hard coat layer containing inorganic antistatic particles is apt to reduce in transparency due to absorption of visible light by free-electron absorption of the inorganic antistatic particles.

On the other hand, when inorganic antistatic particles are added to an adhesion layer provided on a transparent film for ensuring adhesion between a hard coat layer and a transparent film, a resultant antireflection film has antistatic property with ensuring high transparency. Such antireflection film is disclosed, for example, in JP2004-163752 A. By addition of the inorganic antistatic particles to the adhesion layer, it becomes possible to add high refractive index particles having nonconductivity and a little absorption of visible light to the hard coat layer.

However, enhancement of antireflection effect in the conventional antireflection film for display is apt to bring about the problem that incident lights are reflected on the interface between any two layers of the transparent film, the adhesion layer and the hard coat layer to generate interference fringe (color shading). The occurrence of interference fringe brings about reduction of visibility of optical devises such as display.

Disclosure of the Invention

Thus the object of the present invention is to provide an antireflection film for display having high antireflection property which is repressed in occurrence of interference fringe.

As to the above-mentioned problems, the present inventors have made various studies. In consequence, they have found that it is possible to repress occurrence of interference fringe with maintaining high antireflection property by using a hard coat layer having refractive index of 1.67 or more and by setting refractive index of an adhesion layer to a value shifted by 0.07 or less from an intermediate value between the refractive indices of the transparent film and hard coat layer.

Thus, the present invention is provided by an antireflection film for display comprising a transparent film, an adhesion layer having antistatic property provided thereon, a hard coat layer provided thereon and a low refractive index layer provided thereon,

wherein the hard coat layer has refractive index of not less than 1.67, the transparent film has refractive index ($R_1$), the adhesion layer has refractive index ($R_2$) and the hard coat layer has refractive index ($R_3$), the refractive indices ($R_1$), ($R_2$) and ($R_3$) satisfying the following formula (I):

$$\left| R_2 - (R_1 + R_3) / 2 \right| \leqq a \qquad (I)$$

in which "a" is real number of not more than 0.07.

The embodiments of the antireflection film for display according to the present invention are described as follows:

(1) The hard coat layer contains a fine particle composed of at least one oxide selected from zirconia, titania, selenium oxide and zinc oxide. Thereby a hard coat layer having enhanced hardness and high refractive index can be formed in low cost.

(2) The difference between refractive index of the low refractive index layer and that of the hard coat layer is in the range of 0.20 to 0.60 to obtain enhanced antireflection property.

(3) The adhesion layer (i.e., adhesion-facilitating layer) has a thickness of 60 to 200nm. Thereby, occurrence of interference fringe can be greatly repressed.

Effect of the Invention

According to the present invention, an antireflection film for display having high antireflection property and greatly repressed in occurrence of interference fringe can be obtained. Hence, the image displaying area of display provided with the film can be greatly enhanced in visibility.

Brief Description of the Drawings

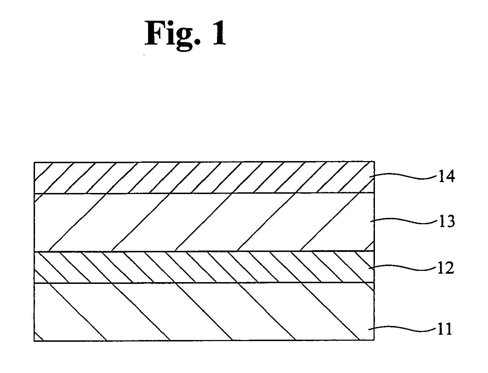

Fig. 1 is a schematic section view showing an antireflection film for display as one preferred embodiment of the invention.

Explanation of reference number

[0016]

11   Transparent film
12   Adhesion layer
13   Hard coat layer
14   Antireflection layer

Description of Preferred Embodiments

An antireflection film for display of the present invention includes a transparent film 11, an adhesion layer 12 provided thereon, a hard coat layer 13 provided on the adhesion layer 12, and a low refractive index layer 14 provided on the a hard coat layer 13.

In the antireflection film for display, the hard coat layer has refractive index of not less than 1.67, the transparent film has refractive index ($R_1$), the adhesion layer has refractive index ($R_2$) and the hard coat layer has refractive index ($R_3$), the refractive indices ($R_1$), ($R_2$) and ($R_3$) satisfying the following formula (I):

$$\left| R_2 - (R_1 + R_3) / 2 \right| \leqq a \qquad (I)$$

in which "a" is real number of not more than 0.07.

By satisfying the condition of the formula (I), interference fringe caused by reflection of lights incident upon the interface between the transparent film and the adhesion layer and the interface between the hard coat layer and the adhesion layer can be repressed.

To greatly repress occurrence of interference fringe, "a" is not more than 0.07, preferably not more than 0.03, more preferably not more than 0.02, especially preferably in the rage of 0.02 to 0.00.

In the antireflection film for display of the invention, the hard coat layer has refractive index of not less than 1.67, preferably refractive index of not less than 1.70, especially preferably refractive index of not less than 1.80. Thereby the antireflection film having enhanced antireflection property can be obtained.

The above-mentioned hard coat layer is preferably prepared by using a fine particle having high refractive index. Examples of the particles preferably include fine particles of oxides such as zirconia, titania, selenium oxide and zinc oxide. The use of the oxide particles enables formation of the hard coat layer which is enhanced in transparency by reduction of absorption of visible light and which has enhanced hardness and high refractive index in low cost. The oxide particles can be used singly or in combination of two or more kinds.

The means particle size of the oxide fine particle used in the hard coat layer is generally in the range of 0.001 to 2µm, preferably in the range of 0.001 to 0.2µm. The use of the particle having the above-mentioned size brings about the hard coat layer reduced in scattered light and having high transparency.

The hard coat layer contains generally the oxide fine particle in the range of 5 to 3,000 parts by weight, preferably in the range of 10 to 2,500 parts by weight, especially preferably in the range of 100 to 2,000 parts by weight, based on 100 parts by weight of binder resin contained in the hard coat layer.

The hard coat layer preferably has thickness of 0.3 to 10µm, more preferably thickness of 0.5 to 5µm, whereby the hard coat layer having sufficient enhanced hardness can be obtained.

In the invention, the hard coat layer means a layer having hardness of not less than "H" according to pencil hardness test defined in JIS 5600-5-4 (1999).

The hard coat layer generally contains the oxide fine particle and binder resin as well. In case the binder resin has high refractive index, the hard coat layer may not contain the oxide fine particle but consist of the binder resin.

Examples of the binder resin include acrylic resin, epoxy resin, urethane resin and silicon resin. The binder resin may be thermosetting resin or ultraviolet curable resin, preferred is ultraviolet curable resin.

Examples of the thermosetting resin include phenol resin, resorcinol resin, urea resin, melamine resin, epoxy resin, acrylic resin, urethane resin, furan resin and silicon resin.

Examples of the ultraviolet curable resin (monomers, oligomers) include (meth)acrylate monomers such as 2-hydroxyethyl (meth)acrylate, 2-hydroxyropyl (meth)acrylate, 4-hydroxybutyl (meth)acrylate, 2-ethylhexylpolyethoxy (meth)acrylate, benzyl (meth)acrylate, isobornyl (meth)acrylate, phenyloxyethyl (meth)acrylate, tricyclodecane mono (meth)acrylate, dicyclopentenyloxyethyl (meth)acrylate, tetrahydrofurfuryl (meth)acrylate, acryloylmorpholine, N-vinyl-aprolactam, 2-hydroxy-3-phenyloxypropyl (meth)acrylate, o-phenylphenyloxyethyl (meth)acrylate, neopentylglycol di (meth)acrylate, neopentyl glycol dipropoxy di(meth)acrylate, neopentyl glycol hydroxypivalate di(meth)acrylate, tricyclodecanedimethylol di(meth)acrylate, 1,6-hexanediol di(meth)acrylate, nonanediol di(meth)acrylate, trimethylolpropane tri(meth)acrylate, pentaerythritol tri(meth)acrylate, pentaerythritol tetra(meth)acrylate, tris[(meth)acryloxyethyl]isocyanurate and ditrimethylolpropane tetra(meth)acrylate; and
the following (meth)acrylate oligomer such as:

polyurethane (meth)acrylate such as compounds obtained by reaction among the following polyol compound and the following organic polyisocyanate compound and the following hydroxyl-containing (meth)acrylate:
the polyol compound (e.g., polyol such as ethylene glycol, propylene glycol, neopentyl glycol, 1,6-hexanediol, 3-methyl-1,5-pentanediol, 1,9-nonanediol, 2-ethyl-2-butyl-1,3-propanediol, trimethylolpropane, diethylene glycol, dipropylene glycol, polypropylene glycol, 1,4-dimethylolcyclohexane, bisphenol-A polyethoxydiol and polytetramethylene glycol; polyesterpolyol obtained by reaction of the above-mentioned polyol with polybasic acid or anhydride thereof such as succinic acid, maleic acid, itaconic acid, adipic acid, hydrogenated dimer acid, phthalic acid, isophthalic acid and terephthalic acid; polycaprolactone polyol obtained by reaction of the above-mentioned polyol with ε-caprolactone; a compound obtained by reaction of the above-mentioned polyol and a reaction product of the above-mentioned polybasic acid or anhydride thereof and ε-caprolactone; polycarbonate polyol; or polymer polyol), and
the organic polyisocyanate compound (e.g., tolylene diisocyanate, isophorone diisocyanate, xylylene diisocyanate, diphenylmethane-4,4'-diisocyanate, dicyclopentanyl diisocyanate, hexamethylene diisocyanate, 2,4,4'-trimethylhexamethylene diisocyanate, 2,2',4-trimethylhexamethylene diisocyanate), and
the hydroxyl-containing (meth)acrylate (e.g., 2-hydroxyethyl (meth)acrylate, 2-hydroxyropyl (meth)acrylate, 4-hydroxybutyl (meth)acrylate, 2-hydroxy-3-phenyloxypropyl (meth)acrylate, cyclohexane-1,4-dimethylolmono(meth)acrylate, pentaerythritol tri(meth)acrylate or glycerol di(meth)acrylate);
bisphenol-type epoxy(meth)acrylate obtained by reaction of bisphenol-A epoxy resin or bisphenol-F epoxy resin and (meth)acrylic acid.

These compounds can be employed singly or in combination of two or more kinds. The ultraviolet curable resin can be used together with thermo polymerization initiator, i.e., these can be employed as a thermosetting resin.

To obtain the hard coat layer, hard polyfunctional monomer such as pentaerythritol tri(meth)acrylate, pentaerythritol tetra(meth)acrylate, and dipentaerythritol hexa(meth)acrylate, is preferably used in a main component.

The provision of the hard coat layer can be carried out, for example, by applying or printing a resin composition including the binder resin or monomers or oligomers for binder resin, if desired the above-mentioned oxide fin particle, a reaction initiator (e.g., a photopolymerization initiator), a solvent such as toluene and additives onto the transparent film, and then cured by using preferably heating, or irradiation of electron beam or ultraviolet rays. In case of curing of heating, or irradiation of electron beam or ultraviolet rays, the curing may be carried out together with that of the antireflection layer as described later.

Photopolymerization initiators for the ultraviolet curable resin can be optionally selected depending upon the properties of the ultraviolet curable resin used. Examples of the photopolymerization initiators include acetophenone type initiators such as 2-hidroxy-2-methyl-1-phenylpropane-1-on, 1-hydroxycyclohexylphenylketone and 2-methyl-1-[4-(methylthio)phenyl]-2-morphorino-propane-1-on; benzoin type initiators such as benzylmethylketal; benzophenone type initiators such as benzophenone, 4-phenylbenzophenone and hydroxybenzophenone; thioxanthone type initiators such as isopropylthioxanthone and 2,4-diethythioxanthone. Further, as special type, there can be mentioned methylphenylglyoxylate. Especially preferred are 2-hidroxy-2-methyl-1-phenylpropane-1-on, 1-hydroxycyclohexylphenylketone, 2-methyl-1-[4-(methylthio)phenyl]-2-morphorinopropane-1-on and benzophenone. These photopolymerization initiators can be employed together with one or more kinds of a conventional photopolymerization promoter such as a benzoic acid type compound (e.g., 4-dimethylaminobenzoic acid) or a tertiary amine compound by mixing with the promoter in optional ratio. Only the initiator can be employed singly or in combination of two or more kinds. Especially, 1-hydroxycyclohexylphenylketone (Irgercure 184, available from Chiba-Specialty Chemicals) is preferred.

The initiator is preferably contained in the resin composition in the range of 0.1 to 10% by weight, particularly 0.1 to 5% by weight based on the resin composition.

The antireflection film of the invention has a low refractive index layer on the hard coat layer to improve antireflection property. The low refractive index layer has refractive index lower than that of the hard coat layer. The antireflection film may have the low refractive index layer and a high refractive index layer higher than that of the low refractive index layer. To obtain improved antireflection property with repression of occurrence of interference fringe in low cost, it is preferred to use only the low refractive index layer as the antireflection layer.

The low refractive index layer includes a transparent thin layer of metal oxide formed by means of chemical vapor deposition (CVD) or physical vapor deposition (PVD), and a coating layer formed by coating and curing a solution containing oxide fine particles.

The coated layer formed by coating a liquid containing oxide fine particles, etc. is preferred as the low refractive index layer because of reduced production cost and excellent productivity. The low refractive index layer is preferably, for example, a coating layer having a binder resin (preferably UV curable resin) and oxide fine particles and/or fluororesin fin particles dispersed in the resin.

In order to highly repress occurrence of interference fringe in the antireflection film of the invention, the difference between refractive index of the low refractive index layer and that of the hard coat layer is preferably set to 0.20 to 0.50, more preferably 0.30 to 0.50.

The low reflective index layer preferably has refractive index of 1.30 to 1.50, more preferably 1.30 to 1.45. The refractive index of more than 1.50 brings about reduction of antireflection property of the antireflection layer. The thickness generally is in the range of 10 to 500nm, preferably 20 to 200nm.

As the binder resin such as UV curable resin, those described in the hard coat layer can be used.

Example of the oxide fine particle preferably includes hollow silica. Examples of the fluororesin fine particle include particles of FET (fluoroethylene/propylene copolymer), PTFE (polytetrafluoroethylene), ETFE (ethylene/tetrafluoroethylene copolymer), PVF (polyvinyl fluoride), and PVD (polyvinylidene fluoride).

The mean particle size of the oxide fine particle and fluororesin fine particle in the low refractive index layer generally is in the range of 1nm to 1$\mu$m, preferably 5 to 200nm. Especially preferred is the hollow silica. The mean particle size of the hollow silica generally is in the range of 10 to 100nm, preferably 10 to 50nm, and the specific gravity is generally in the range of 0.5 to 1.0, preferably 0.8 to 0.9.

The content of the oxide fine particle and fluororesin fine particle in the low refractive index layer-generally is in the range of 5 to 2,000 parts by weight, preferably 80 to 200 parts by weight, based on 100 parts by weight of the binder resin such as UV curable resin.

A high refractive index layer may be provided as an antireflection layer on the upside or underside of the low refractive index layer.

The high reflective index layer is preferably a layer (cured layer) in which a conductive metal oxide particle (inorganic compound) such as tin-doped indium oxide (ITO), antimony-doped tin oxide (ATO), fluorine-doped tin oxide (FTO), phosphorus-doped tin oxide (PTO), zinc antimonate, indium-doped zinc oxide, ruthenium oxide, rhenium oxide, silver oxide, nickel oxide, copper oxide, $Sb_2O_3$, $SbO_2$, $In_2O_3$, $SnO_2$, $ZnO$, Al-doped $ZnO$, $TiO_2$ are dispersed in the binder resin (preferably ultraviolet curable resin), the conductive metal oxide particles being used as for adjusting the refractive index.

The conductive metal oxide particle generally has mean particle size of 10 to 1,000mn, preferable 10 to 50nm. The use of the conductive metal oxide particle having the mean particle size enables improvement of winding property. Especially ITO (especially mean particle size of 10 to 50nm) is preferred.

As the binder resin such as UV curable resin in the high refractive index layer, those described in the hard coat layer can be used.

The content of the fine particle for adjusting refractive index in the high refractive index layer generally is in the range of 5 to 2,000 parts by weight, preferably 80 to 200 parts by weight, based on 100 parts by weight of the binder resin such as UV curable resin.

The high refractive index layer preferably has refractive index of not less than 1.60, especially not less than 1.64. The thickness generally is in the range of 10 to 500nm, preferably 20 to 200nm.

The provision of each of the antireflection layer can be carried out, for example, by mixing binder resin (preferably ultraviolet curable resin) with if desired the above-mentioned oxide fine particle and fluororesin fine particle, conductive metal oxide fine particle, reaction initiator such as photopolymerization initiator and solvents such as toluene, and applying the resultant coating liquid onto a transparent film, and then drying, if desired curing by heating, or after the coating, if desired drying, and exposed to ultraviolet rays. The layers may be applied and cured, respectively, or all the layers may be applied and then cured at one time. As the photopolymerization initiator, those described in the hard coat layer can be preferably used.

The application can be carried out, for example, by applying a coating liquid (solution) of ultraviolet curable resin including acrylic monomers in a solvent such as toluene by means of gravure coater, and drying, and then exposing to UV rays to be cured. This wet-coating method enables high-speed, uniform and cheap film formation. After the coating, for example, the coated layer is exposed to UV rays to be cured whereby the effects of improved adhesion and enhanced hardness of the layer can be obtained. The conductive layer can be formed in the same manner.

In the UV- rays curing, it is possible to adopt, as light source used, various sources generating light in the wavelength range of ultraviolet to visible light. Examples of the sources include super-high-pressure, high-pressure and low-pressure mercury lamps, a chemical lamp, a xenon lamp, a halogen lamp, a mercury halogen lamp, a carbon arc lamp, and an incandescent electric lamp, and laser beam. The exposing time is generally in the range of a few seconds to a few minutes, depending upon kinds of the lamp and strength of light. To promote the curing, the laminate may be heated beforehand for 40 to 120°C, and then the heated laminate may be exposed to ultraviolet rays.

In the antireflection film of the invention, the above-mentioned hard coat layer and antireflection layer(s) are provided on a transparent film through an adhesion layer.

The adhesion layer may be any layer having adhesion to the transparent film and to the hard coat layer, and antistatic property. The adhesion layer generally is a layer containing an inorganic antistatic particle, an organic antistatic agent, high refractive index particle and/or high refractive index resin, and easy adhesion resin. In view of stability of antistatic effect, preferred is a layer containing an inorganic antistatic particle or an organic antistatic agent and easy adhesion resin. Especially preferred is a layer containing an inorganic antistatic particle and easy adhesion resin.

Examples of the organic antistatic agent include known antistatic agents such as silicon-type antistatic agent, nonion-type antistatic agent, anion-type antistatic agent, cation-type antistatic agent, ampho-ion-type antistatic agent, conductive polymers. Preferred examples include cation-type antistatic agents having one or more quaternary ammonium salt groups having alkyl group(s) of carbon atoms 8-22 in its molecule; hydrocarbon polymers such as polyacetylene, polyphenylene, polyphenylene vinylene, polyacene, polyphenylene acetylene, polynaphthalene, polyethylene vinylene; conductive polymers such as hetero atom containing polymers (e.g., polypyrrol, polyaniline, polythiophene, polyazulene, polyisothianaphthene).

Examples of the inorganic antistatic particle preferably include antimony-doped tin oxide (ATO), tin-doped indium oxide (ITO), zinc antimonate, and phosphorus-doped tin oxide (PTO). The use of these inorganic antistatic particles enables the formation of an adhesion layer having excellent conductivity and enhanced antistatic property.

The inorganic antistatic particle generally has mean particle size of 10 to 500nm, preferable 10 to 200nm, whereby enhanced antistatic property can be obtained without reduction of transparency.

The content of the inorganic antistatic particle in the adhesion layer generally is in the range of 100 to 2,000 parts by weight, preferably 150 to 500 parts by weight, based on 100 parts by weight of the easy adhesion resin. Thereby, the adhesion layer improved in refractive index and antistatic property can be obtained.

Examples of the easy adhesion resin include ethylene/vinyl acetate copolymer, ethylene/methyl acrylate copolymer, acrylic resin (e.g., ethylene/(meth)acrylic acid copolymer, ethylene/ethyl (meth)acrylate copolymer, ethylene/methyl (meth)acrylate copolymer, metal-ion crosslinked ethylene/(meth)acrylic acid copolymer), and ethylene copolymers such as partially saponified ethylene/vinyl acetate copolymer, carboxylated ethylene/vinyl acetate copolymer, ethylene/(meth)acrylic acid/maleic anhydride copolymer, ethylene/vinyl acetate/(meth)acrylate copolymer. The (meth) acrylic acid means acrylic acid and methacrylic acid and the (meth)acrylate means acrylate and meth acrylate. Besides these polymers, there can be mentioned polyvinyl butyral (PVB) resin, epoxy resin, phenol resin, silicon resin, polyester resin, acrylated polyester resin, and urethane resin. The acrylic resin, epoxy resin and polyester resin are preferred because they show excellent adhesion.

The adhesion layer preferably has refractive index of 1.66 to 1.90, more preferably 1.67 to 1.75, depending upon the refractive indices of the transparent film and hard coat layer. Thereby the antireflection film repressed in interference fringe and enhanced in antireflection property can be obtained.

The thickness of the adhesion layer generally is in the range of 60 to 200nm, especially 60 to 110nm, whereby occurrence of interference fringe can be highly repressed.

In the transparent film used in the antireflection film, any materials can be used provided that they are transparent, which means transparent to visible light. As the transparent film, a plastic film is generally used. Examples of materials of the plastic films include polyesters such as polyethylene terephthalate (PET), polybutylene terephthalate and polyethylene naphthalate, polymethyl methacrylate (PMMA), acrylic resin, polycarbonate (PC), polystyrene, cellulose triacetate, polyvinyl alcohol, polyvinyl chloride, polyvinylidene chloride, polyethylene, ethylene-vinyl acetate copolymer, polyvinyl butyral, metal-crosslinked ethylene-methacrylic acid copolymer, polyurethane and cellophane. Preferred are polyethylene terephthalate (PET), polybutylene terephthalate, polyethylene naphthalate, polymethyl methacrylate (PMMA), acrylic resin and polycarbonate (PC), more preferably PET, polymethyl methacrylate (PMMA) and polycarbonate (PC), because have high resistance to processing load such as heat, solvent and bending and high transparency. Especially PET is preferred because of high refractive index, further high transparency, enhanced flexibility, and enhanced mechanical properties such as tensile strength and coefficient of extension, and improved insulated withstand voltage.

The transparent film has generally a thickness of 10 to 250$\mu$m, preferably 50 to 200$\mu$m.

The antireflection film of the invention may have a near-infrared absorption layer, an electromagnetic shielding layer in addition to the above-mentioned layers. Thereby further functions can be imparted to the antireflection film.

The near-infrared absorption layer (i.e., near-infrared shielding layer) is generally obtained by forming a layer containing dye on a surface of the transparent film. The near-infrared absorption layer is prepared, for example, by applying a coating liquid comprising a dye and ultraviolet- or electron-beam-curable resin and/or synthetic resin as a binder, if desired drying, and curing the layer. When the near-infrared absorption layer is used as a film, it is generally a near-infrared cut film, such as dye-containing film.

The dye generally has absorption maximum in wavelength of 800 to 1,200nm, and its examples include phthalocyanine dyes, metal complexes dyes, nickel dithioren complexes dyes, cyanine dyes, squalirium dyes, polymethine dyes, azomethine dyes, azo dyes, polyazo dyes, diimmonium dyes, aminium dyes, anthraquinone dyes. Preferred are cyanine dyes, squalirium dyes. These dyes can be employed singly or in combination.

Examples of the resin as binder include acrylic resin, fluororesin, polyester resin, vinyl chloride resin, styrene resin, and norbornene resin. These resins can be employed singly or in combination of two or more kinds.

In the invention, a neon-emission absorption function may be given to the near-infrared absorption layer such that the near-infrared absorption layer has function for adjusting color hue. For this purpose, although a neon-emission absorption layer may be provided, the near-infrared absorption layer may contain a neon-emission selective absorption dye.

Examples of the neon-emission selective absorption dyes include cyanine dyes, squalirium dyes, anthraquinone dyes, phthalocyanine dyes, polymethine dyes, polyazo dyes, azulenium dyes, diphenylmethane dyes, triphenylmethane dyes. The neon-emission selective absorption dyes are required to have selective absorption function of neon-emission at wavelength of approx. 585nm and small absorption in a wavelength range of visible light except the wavelength. Hence, the dyes preferably have absorption maximum wavelength of 575 to 595nm, and half bandwidth of absorption spectrum of 40nm or less.

In case a plurality of the absorption dyes including a dye for absorbing near-infrared light and a dye for absorbing neon emission light are used in combination, and if there are difficulties in terms of solubility of dyes, if there are undesirable reactions among mixed dyes, and/or if deterioration of thermal resistance or moisture resistance occurs, it is not necessary for all the near-infrared absorption dyes to be contained in the same layer, and the near-infrared absorption dyes may be contained in different layers in such a case.

Further, coloring materials, ultraviolet absorbers, and antioxidants may be added so long as those materials do not largely affect the optical properties of the filter.

As the near-infrared absorption properties of the antireflection film of the invention, the transmittance of light in a wavelength range of 850 to 1000 nm preferably is 20% or lower, more preferably 15% or lower. As the selective absorption properties of the antireflection film, the transmittance of light at a wavelength of 585 nm preferably is 50% or lower. In the former properties, a transmittance of light existing in the wavelength range can be reduced, the wavelength range being thought to be a cause of malfunction of remote control systems in peripheral devices. In the latter property, since orange light having a peak wavelength in the range of 575 to 595 nm deteriorates color reproductivity, the wavelength of orange light is absorbed so as to make red light more intrinsic and as a result, reproducibility of colors can be improved.

The near-infrared absorption layer generally has thickness of 0.5 to 50$\mu$m in view of absorption of near-infrared rays and transmission of visible light.

The near-infrared absorption layer preferably contains a dye for color calibration. Otherwise a color calibration layer containing a dye for color calibration may be provided in the same manner as the near-infrared absorption layer.

The dye for color calibration is preferably a dye showing complementary to color of from brownish to yellow green of the near-infrared absorption layer so as to neutralize the color of from brownish to yellow green. Examples of the dye for color calibration include inorganic pigments, organic pigments, organic dyes, and other conventional dyes. Examples of the inorganic pigments include cobalt compounds, iron compounds, chromium compounds, and examples of the organic pigments include azo pigments, indolinone pigments, quinacridone pigments, vat pigments, phthalocyanine pigments, naphthalocyanine pigments. Examples of the organic dyes and other conventional dyes include azo dyes, azine dyes, anthraquinone dyes, indigoid dyes, oxazine dyes, quinophthalone dyes, squalirium dyes, stylbene dyes, triphenylmethane dyes, naphthoquinone dyes, pyralozone dyes, polymethine dyes. Of these pigments and dyes, organic pigments are preferably used in view of chromogenic property and durability.

The color calibration layer generally contains a synthetic resin as binder in addition to the above-mentioned dyes and pigments. As the synthetic resin of the color calibration layer, the resins as described in the near-infrared absorption layer are used.

In the antireflection film of the invention, the near-infrared absorption layer and the color calibration layer are preferably provided on a surface opposite to the surface of the transparent film on which the low refractive index layer or the like is formed. Hence, preferred is a structure of color calibration layer/ near-infrared absorption layer/transparent film/adhesion layer/hard coat layer/low refractive index layer, these layers and film being laminated in this order. However the laminated order is not restricted to this order, it may be changed depending upon the intended use.

The electromagnetic shielding layer generally is a mesh-shaped (lattice-shaped) conductive layer. Otherwise, the electromagnetic shielding layer may be a layer obtained by gas phase coating (deposition), the layer being a transparent conductive layer of metal oxide such as ITO. Further, the electromagnetic shielding layer may be alternately laminated layers of a dielectric layer of metal oxide such as ITO and a metal layer of Ag (e.g., ITO/Ag/ ITO/Ag/ ITO). Moreover, the electromagnetic shielding layer may be a coated layer.

The mesh-shaped electromagnetic shielding layer includes a mesh-shaped metal layer made of metal fiber or metal-coated organic fiber, a layer obtained by etching a metal (e.g., Cu) layer provided on a transparent film so as to form mesh having openings, and a layer obtained by printing an electrically conductive ink (e.g., metal-containing resin layer) on a transparent film so as to form mesh.

The mesh of the mesh-shaped electromagnetic shielding layer preferably has line width of 1$\mu$m to 1mm and opening ratio of 40 to 95%, which generally comprises metal fiber or metal-coated organic fiber. Further preferred is a mesh having line width of 10 to 500$\mu$m and opening ratio of 50 to 95%. The mesh of mesh-shaped electromagnetic shielding layers formed from other materials preferably has also line width and opening ratio as mentioned above. In the mesh-shaped metal conductive layer, line width more than 1mm brings about enhanced electromagnetic-wave shielding property, while opening ratio in reduced. Line width less than 1$\mu$m brings about reduction of the strength of the resultant mesh to render its handling difficult. Moreover, opening ratio more than 95% renders keeping of the shape of the mesh difficult, while opening ratio less than 40% brings about reductions of optical transmission and of light amount from a display.

The opening ratio (aperture ratio) of the mesh-shaped metal conductive layer means the proportion of the area of the opening portion of the layer to the projected area of the layer.

Examples of metals for the metal fiber and /or metal-coated organic fiber of the mesh-shaped electromagnetic shielding layer include copper, stainless, aluminum, nickel, titanium, tungsten, tin, lead, iron, silver, carbon or alloys thereof, preferably copper, stainless or nickel.

Examples of organic materials used in the metal-coated organic fiber include polyester, nylon, polyvinylidene chloride, aramid, Vinylon, and cellulose.

The mesh-shaped electromagnetic shielding layer preferably is a patternwise etched conductive foil such as metallic foil. Examples of the metals for the metallic foil include copper, stainless, aluminum, nickel, iron, brass or alloys thereof, preferably copper, stainless or aluminum is used.

In case of decreasing the thickness of the foil to excess, handling of the foil and workability of pattern etching are reduced. In case of increasing the thickness to excess, a thickness of the resultant filter is increased and time period requiring for etching procedure is lengthened. Therefore the thickness of the conductive layer preferably is in the range of 1 to 200 $\mu$m.

The etched pattern may have any shapes. For example, the metallic foil is in the form of mesh (lattice), which is obtained by forming square openings (pores) on the foil, or in the form of punching metal, which is obtained by forming circle, hexagon, triangle or ellipse openings. The pores may be regularly arranged or irregularly arranged to form a random pattern. The opening ratio (the proportion of the area of the opening portion to the projected area) of the metal foil is preferably in the range of 20 to 95%.

The mesh-shaped electromagnetic shielding layer may be formed by printing a conductive ink in the form of pattern. As the conductive ink, the following ink can be used, and the printing can be carried out by using an inkjet printing method, an electrostatic printing method.

The conductive ink generally includes 50 to 90% by weight of conductive material particles such as carbon black particles having particle size of not more than 100μm, or particles of metal (e.g., copper, aluminum, nickel) or alloys and a binder resin such as PMMA, polyvinyl acetate or epoxy resin for dispersing the particles. The conductive ink is diluted or dispersed in solvent such as toluene, xylene, methylene chloride and/or water, and the resultant liquid is coated by means of a printing method, and then, if desired, dried and fixed at room temperature to 120°C. In the same manner, conductive particles coated with binder resin thereon is coated by means of an electrostatic printing method, and fixed by heating.

The resultant printed layer preferably has a thickness of 0.5 to 100μm, because too small thickness brings about reduction of electromagnetic shielding effect and too large thickness affects thickness of the film.

By using the above-mentioned pattern printing methods, an electromagnetic shielding having large freedom of pattern, desired line width, pitch and opening shape can be formed. Therefore a plastic film having electromagnetic shielding property and light transmission (transparency) can be easily formed.

The patternwise-printed shape of the electromagnetic shielding layer may have any shape. For example, the printed layer is in the form of mesh (lattice), which is obtained by forming square openings (pores) on the foil, or in the form of punching metal, which is obtained by forming circle, hexagon, triangle or ellipse openings. The pores may be regularly arranged or irregularly arranged to form a random pattern. The opening ratio (the proportion of the area of the opening portion to the projected area) of the printed layer is preferably in the range of 20 to 95%.

Besides above, material soluble in a solvent is dot-wise applied to a film to form dots, a conductive material layer insoluble in the solvent is formed on the film, and the film is brought in contact with the solvent to remove the dots and the conductive material layer is provided on the dots whereby a mesh-shaped electromagnetic shielding layer can be obtained. The mesh-shaped electromagnetic shielding layer may be used in the invention.

The electromagnetic shielding layer formed by coating includes a coated layer having conductive particles of inorganic compound dispersed in polymer.

Examples of the inorganic compounds constituting the conductive particles include metals such s aluminum, nickel, indium, chromium, gold, vanadium, tin, cadmium, silver, platinum, copper, titanium, cobalt, lead or alloys thereof; or conductive metal oxide particles such as ITO, indium oxide, tin oxide, zinc oxide, indium oxide-tin oxide (ITO, i.e., tin-doped indium oxide), tin oxide-antimony oxide (ATO, i.e., antimony-doped tin oxide), zinc oxide-aluminum oxide (ZAO, i.e., aluminum-doped zinc oxide). Especially preferred is ITO. The mean particle size preferably is 10 to 10,000nm, especially 10 to 50nm.

Examples of the polymer include acrylic resin, polyester resin, epoxy resin, urethane resin, phenol resin, maleic acid resin, melamine resin, urea resin, polyimide resin and silicon-containing resin. Of these resins, thermosetting resins are preferred. Otherwise, it is preferred to use UV curable resin described in the hard coat layer as the polymer.

The provision of the coated electromagnetic shielding layer is generally carried out by preparing a coating liquid through dispersing the conductive particles in the polymer (if desired, solvent) by mixing, applying the coating liquid to a substrate or the transparent film, if desired dried, and cured. In case of using thermoplastic resin, the layer can be obtained by the application and drying. In case of using thermosetting resin, the layer can be obtained by the application, drying and curing. Further, in case of using UV curable resin, the layer can be obtained by the application, if desired drying and exposure to ultraviolet light.

The coated electromagnetic shielding layer has preferably a thickness of 0.01 to 5μm, especially 0.05 to 3μm. When the thickness is less than 0.01μm, the electromagnetic shielding effect is occasionally reduced. When the thickness is more than 5μm, the transparency is occasionally reduced.

The electromagnetic shielding layer preferably is also a conductive polymer layer formed by application (coating). Examples of the conductive polymer include hydrocarbon polymers such as polyacetylene, polyphenylene, polyphenylene vinylene, polyacene, polyphenylacetylene, polynaphthalene; hetero atom containing polymers such as polypyrrol, polyaniline, polythiophene, polyethylene vinylene, polyazulene, polyisothianaphthene. Preferred are polypyrrol and polythiophene. The electromagnetic shielding layer of the conductive polymer has preferably a thickness of 0.01 to 5μm, especially 0.05 to 3μm. When the thickness is less than 0.01μm, the electromagnetic shielding effect is occasionally reduced. When the thickness is more than 5μm, the transparency is occasionally reduced.

The metal oxide layer as the electromagnetic shielding layer is generally provided by a film forming method by vapor. Examples of the film forming method include vapor film forming methods such as sputtering, ion plating, electron beam deposition, vacuum deposition and chemical deposition; or printing or coating. Preferred are the vapor film forming methods. In this case, the use of the inorganic compound constituting the conductive particle enables the formation of the electromagnetic shielding layer. The electromagnetic shielding layer formed by the vapor film forming method has preferably a thickness of 30 to 5,000nm, especially approx. 50nm.

The electromagnetic shielding layer generally may be alternately laminated layers of a dielectric layer (metal oxide) and a metal layer. Preferred is five or more layered body such as dielectric layer/metal lay/dielectric layer/metal lay/ dielectric layer (e.g., laminate of ITO/Ag/ITO/Ag/ ITO). Moreover, the electromagnetic shielding layer may be a coated layer.

The electromagnetic shielding layer using dielectric layer and metal layer is generally provided by physical or chemical deposition. Examples of the physical deposition include vacuum deposition, sputtering, ion plating, laser ablation method. Preferred is sputtering. Examples of the chemical deposition include CVD method under ordinary pressure, CVD method under reduced pressure, plasma CVD method.

A metal plated layer (metallic deposit) is preferably provided further on the electromagnetic shielding layer (preferably mesh-shaped electromagnetic shielding layer, especially mesh-shaped metal containing electromagnetic shielding layer) in order to further reduce resistance value to enhance electromagnetic shielding effect.

The metal plated layer can be formed by conventional electrolytic plating and nonelectrolytic plating. Examples of metals used in the plating generally include copper, copper alloy, nickel, silver, gold, zinc or tin. The metals can be singly or in combination of two or more kinds as alloy. Preferred is copper, copper alloy, silver or nickel, particularly copper or copper alloy is preferred in view of economic efficiency and conductive property.

Further antiglare property may be provided to the electromagnetic shielding layer. In the antiglare treatment, a blackened treatment may be carried out on a surface of the (mesh-shaped) electromagnetic shielding layer to form a blackened layer. For example, the antiglare treatment can be carried out, for example, by oxidation treatment of metal layer, black plating of chromium alloy, or application of black or dark color ink.

In the antireflection film having electromagnetic shielding layer, the electromagnetic shielding layer is preferably provided on the antireflection layer such as the low refractive index layer, or provided on a surface opposite to the surface of the transparent film on which the antireflection layer such as a low refractive index layer is formed. The laminated order of the layers is determined depending upon the intended use.

The antireflection film for display of the invention can be advantageously obtained, for example, by forming a hard coat layer and a low refractive index layer on a continuous transparent film through application and light curing respectively, and forming a near-infrared absorption layer on the reverse side of the continuous transparent film through application and drying.

The antireflection film is preferably set such that surface resistance value is not more than $1.0 \times 10^{13} \Omega/\square$, preferably in the range of $1.0 \times 10^{7} \Omega/\square$ to $1.0 \times 10^{12} \Omega/\square$ in order to prevent dust adhesion when the thickness is in the range of 0.05 to 5.0 $\mu$m.

In the antireflection film, the hard coat layer preferably has visible light transmittance of not less than 85%. The high and low refractive indices layers preferably have visible light transmittance of not less than 85%, too.

The antireflection film for display is generally attached to a display by arranging an antireflection film having a transparent adhesive layer on the top surface of the reverse side of the antireflection film on a image displaying glass of the display and sticking these together with the transparent adhesive layer.

In the antireflection film having adhesive layer, the difference between the refractive index of the top layer of the reverse side of the antireflection film and the refractive index of the transparent adhesive layer is preferably is not more than 0.05, especially not more than 0.04. Thereby the antireflection film having high transparency and excellent visibility and appearance can be obtained. The measurement of the refractive index can be carried out according to the method described in Examples.

The transparent adhesive layer of the invention is used to bond the antireflection film of the invention to a display, and therefore any resin having adhesion function can be used as materials for forming the transparent adhesive layer. Examples of the materials include acrylic adhesives made of butyl acrylate and the like, rubber adhesives, TPE (thermoplastic elastomer) adhesives comprising as main component thermoplastic elastomers such as SEBS (styrene/ ethylene/butylene/styrene) and SBS (styrene/butadiene/styrene).

The thickness of the transparent adhesive layer generally is in the range of 5 to 500$\mu$m, preferably in the range of 10 to 100$\mu$m. The antireflection film can be generally attached to a glass plate of a display through the transparent adhesive layer by the application of heat and pressure.

EVA (ethylene/vinyl acetate/ ethylene copolymer) may be used as materials of the transparent adhesive layer. The EVA generally has the content of vinyl acetate in an amount of 5 to 50 % by weight, especially 15 to 40 % by weight. When the content is less than 5 % by weight, the layer does not show satisfactory transparency. On the other hand, when the content is more than 50 % by weight, the layer extremely reduces in mechanical strength not to increase difficulty of film formation and occurrence of blocking between films.

As a crosslinking agent for EVA, an organic peroxide is generally suitable. The organic peroxide is selected in the consideration of sheet-processing temperature, curing (bonding) temperature, and storage stability. Examples of the organic peroxide include 2,5-dimethylhexane-2,5-dihydroperoxide, 2,5-dimethyl-2,5-(t-butylperoxy)hexyne-3, di-t-butylperoxide, t-butylcumyl peroxide, 2,5-dimethyl-2,5-di(t-butylperoxy)hexane, dicumyl peroxide, $\alpha,\alpha'$-bis(t-butylperox-yisopropyl)benzene, n-butyl-4,4-bis(t-butylperoxy)valerate, 2,2-bis(t-butylperoxy)butane, 1,1-bis(t-butylperoxy)cyclohexane, 1,1-bis(t-butylperoxy)-3,3,5-trimethylcyclohexane, t-butylperoxybenzoate, benzoyl peroxide, t-butylperoxyacetate, 2,5-dimethylhexyl-2,5-bis(t-butylperoxy)hexyne-3, 1,1-bis(t-butylperoxy)-3,3,5-trimethylcyclohexane, 1,1-bis(t-butylperoxy)cyclohexane, methyl ethyl ketone peroxide, 2,5-dimethylhexyl-2,5-bisperoxybenzoate, t-butylhydroperoxide, p-menthane hydroperoxide, p-chlorobenzoyl peroxide, t-butylperoxyisobutylate, hydroxyheptyl peroxide and chlorohexanone peroxide. The organic peroxide can be used singly, or in combination of two or more kinds. The content of the organic peroxide is generally used in an amount of not more than 5 parts by weigh, preferably 0.5 to 5 parts by weight based on 100 parts by weight of EVA.

The organic peroxide is generally kneaded with EVA by means of an extruder or roll mill. However it may be solved in an organic solvent, plasticizer, vinyl monomer and added to an EVA film by means of impregnation method.

The EVA may contain acryloyl group-containing compounds, methacryloyl group-containing compounds, allyl group-containing compounds for improvement of various properties of EVA (e.g., mechanical strength, optical characteristics, adhesive property, weather resistance, whitening resistance, rate of crosslinking). Examples of the acryloyl and methacryloyl group-containing compounds include generally derivatives of acrylic acid or methacrylic acid, such as esters and amides of acrylic acid or methacrylic acid. Examples of the ester residue include linear alkyl groups (e.g., methyl, ethyl, dodecyl, stearyl and lauryl), a cyclohexyl group, a tetrahydrofurfuryl group, an aminoethyl group, a 2-hydroxyethyl group, a 3-hydroxypropyl group, 3-chloro-2-hydroxtpropyl group. Further, the esters include esters of acrylic acid or methacrylic acid with polyhydric alcohol such as ethylene glycol, triethylene glycol, polypropylene glycol, polyethylene glycol, trimethylol propane or pentaerythritol. Example of the amide includes diacetone acrylamide.

Examples of the esters include polyfunctional esters of acrylic acids or methacrylic acids with glycerol, trimethylol propane or pentaerythritol; and further allyl group-containing compounds such as triallyl cyanurate, triallyl isocyanurate, diallyl phthalate, diallyl isophthalate and diallyl maleate. The compounds can be used singly, or in combination of two or more kinds. The content of the compound is generally used in an amount of 0.1 to 2 parts by weight, preferably 0.5 to 5 parts by weight based on 100 parts by weight of EVA.

In case EVA is cured by light, sensitizer (photoinitiator) is used instead of the organic peroxide, and it is generally used in an amount of not more than 5 parts by weigh, preferably 0.1 to 3.0 parts by weight based on 100 parts by weight of EVA.

Examples of the sensitizer include benzoin, benzophenone, benzoyl methyl ether, benzoin ethyl ether, benzoin isopropyl ether, benzoin isobutyl ether, dibenzyl, 5-nitroacenaphtene, hexachlorocyclopentadiene, p-nitrodiphenyl, p-nitroaniline, 2,4,6-trinitroaniline, 1,2-benzanthraquinone, 3-methyl-1,3-diaza-1,9-benzanthrone. The photoinitiators can be used singly, or in combination of two or more kinds.

In the invention, a silane coupling agent may be used to accelerate adhesion. Examples of the silane coupling agent include vinylethoxysilane, vinyltris(β-methoxyethoxy)silane, γ-(methacryloxypropyl)trimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropylmethoxysilane, γ-aminopropyltriethoxysilane, N-β-(aminoethyl)-y-aminopropyltrimethoxysilane.

The silane coupling agent can be used singly, or in combination of two or more kinds. The content of the silane coupling agent is generally in an amount of 0.001 to 10 parts by weight, preferably 0.001 to 5 parts by weight based on 100 parts by weight of EVA.

The EVA transparent adhesive layer of the invention can further contain a small amount of ultraviolet absorbing agent, infrared absorbing agent, age stabilizer (antioxidant), paint processing aid and colorant. If appropriate, filler such as carbon black, hydrophobic silica or calcium carbonate may be contained.

The adhesive layer for adhesion can be obtained, for example, by mixing EVA with the above-mentioned additives and kneaded by means of extruder or roll, and then forming the sheet having the predetermined shape by film formation method using calendar, roll, T-die extrusion or blowing.

A release sheet may be provided on the transparent adhesive layer. Materials for the release sheet is generally transparent polymers having glass transition temperature of not less than 50°C. Examples of the materials include polyester resin (e.g., polyethylene terephthalate, polycyclohexylene terephthalate, polyethylene naphthalate), polyamide resin (e.g., nylon 46, modified nylon 6T, nylon MXD6, polyphthalamide), ketone resin (e.g., polyphenylene sulfide, polythioether sulfone), sulfone resin (e.g., polysulfone, polyether sulfone), polyether nitrile, polyarylate, polyether imide, polyamideimide, polycarbonate, polymethyl methacrylate, triacetylcellulose, polystyrene or polyvinyl chloride. Of these resins, polycarbonate, polymethyl methacrylate, polyvinyl chloride, polystyrene and polyethylene terephthalate can be preferably employed. The thickness is generally in the range of 10 to 200μm, especially in the range of 30 to 100μm.

In the invention, the antireflection film for display having the transparent adhesive layer is generally attached onto a surface of a image displaying glass plate of a display through the transparent adhesive layer. Examples of the display include field emission display (FED) such as surface-conduction electron-emitter display (SED), liquid crystal display (LCD), plasma display panel (PDP), EL display and CRT display.

EXAMPLE

The invention is illustrated in detail using the following Examples and Comparative Examples. The invention is not restricted by the following Examples.

[Example 1]

1. Formation of adhesion layer

100 parts by weight of ATO fine particle dispersion liquid (mean particle size: 100nm; solid content: 20% by weight) and 20 parts by weight of a modified polyester resin aqueous solution (polyester resin: 20% by weight) were mixed with each other by stirring to prepare a resin composition. The resin composition was applied onto a polyethylene terephthalate (PET) film (thickness: 100$\mu$m; refractive index: 1.65) by a bar coater, and dried at 130°C for three minutes to form an easy adhesive layer (thickness: 80nm; refractive index: 1.68).

2. Formation of hard coat layer

| Formulation: | |
| --- | --- |
| Zirconia (mean particle size: 80nm) | 80 wt. parts |
| Dipentaerythritol hexaacrylate (DPHA) | 20 wt. parts |
| Irgacure 184 | |
| (Available from Ciba specialty chemicals) | 4 wt. parts |
| Cyclohexanone | 100 wt. parts |

The materials of the formulation were mixed with each other to prepare a composition. The composition was applied onto the easy adhesive layer by a bar coater, and dried at 80°C for one minute, and then cured by UV irradiation (200mJ/cm$^2$) using a high-pressure mercury lamp. Thereby a hard coat layer (thickness: 2$\mu$m; refractive index: 1.71) was formed on the PET film.

3. Formation of low refractive index layer

| Formulation: | |
| --- | --- |
| Hollow silica | 5 wt. parts |
| Dipentaerythritol hexaacrylate (DPHA) | 5 wt. parts |
| Irgacure 184 | |
| (Available from Ciba specialty chemicals) | 1 wt. part |
| Ethanol/methyl ethyl ketone | 89 wt. parts |

The materials of the formulation were mixed with each other to prepare a composition. The composition was applied onto the hard coat layer by a bar coater, and dried at 80°C for 10 seconds, and then cured by UV irradiation (200mJ/cm$^2$) using a high-pressure mercury lamp. Thereby a low refractive index layer (thickness: 0.1$\mu$m; refractive index: 1.42) was formed on the hard coat layer.

[Comparison Example 1]

1. Formation of adhesion layer

A modified polyester resin aqueous solution (polyester resin: 20% by weight) was applied onto a polyethylene terephthalate (PET) film (thickness: 100$\mu$m; refractive index: 1.65) by a bar coater, and dried at 130°C for three minutes to form an easy adhesive layer (thickness: 80nm; refractive index: 1.51).

2. Formation of hard coat layer

| Formulation: | |
|---|---|
| ATO particle (mean particle size: 80nm) | 80 wt. parts |
| Dipentaerythritol hexaacrylate (DPHA) | 20 wt. parts |
| Irgacure 184 | |
| (Available from Ciba specialty chemicals) | 4 wt. parts |
| Ethanol/methyl ethyl ketone | 100 wt. parts |

The materials of the formulation were mixed with each other to prepare a composition. The composition was applied onto the easy adhesive layer by a bar coater, and dried at 80°C for one minute, and then cured by UV irradiation (200mJ/cm$^2$) using a high-pressure mercury lamp. Thereby a hard coat layer (thickness: 2$\mu$m; refractive index: 1.65) was formed on the PET film.

3. Formation of low refractive index layer

A low refractive index layer (thickness: 0.1$\mu$m; refractive index: 1.42) was formed on the hard coat layer in the same manner as in Example 1.

[Estimation]

The antireflection films obtained in Examples 1 and Comparison Example 1 are evaluated according to the following manner.

(1) Reflectance

Mean reflectance of normal reflectances of light (wavelength range of 450 to 650nm; incident angle of 5) are determined using a spectrophotometer (available from JASCO corporation). The results are shown in Table 1.

(2) All light beam transmittance

All light beam transmittance of the films in the thickness direction are measured by using an automatically reading Haze Computer HGM-2DP (available from SUGA TEST INSTRUMENTS CO., LTD.). The measurement is carried out as to three points of the film, and the mean value of the three measured values corresponds to the all light beam transmittance. The results are shown in Table 1.

(3) Interference fringe

The antireflection film is attached to a screen of a flat CRT by using an adhesive, and the external surface of the screen is irradiated with a three band fluorescent lamp and then it is observed with eyes whether interference fringe has occurred or not. The results are shown in Table 1.

(4) Surface resistance

The antireflection film is subjected to humidity conditioning (25C, 50%RH) for three hours, and the surface resistance is measured by use of a surface resistance-measuring machine according to four-terminal method (Rorester GP, available from Mitsubishi Chemical Corporation). The results are shown in Table 1.

(5) Refractive index

The reflectance of the antireflection film is measured in a wavelength of 230 to 760nm by a reflectance spectroscopy film thickness meter (Trade name: FE-3000, available from Otsuka Electronics Co., Ltd.). An unknown parameter is determined by nonlinear least-squares method from the measured value of spectrum of absolute reflectance with reference to nk_Cauchy dispersion equation as approximate equation of wavelength dispersion of representative refractive index. The results are shown in Table 1.

EP 2 056 130 A1

Table 1

| | Reflectance (%) | All light beam transmittance(%) | Surface resistance ($\Omega/\square$) | Interference fringe |
|---|---|---|---|---|
| Example 1 | 0.7 | 90 | $3\times10^{10}$ | Nonexistence |
| Co. Ex. 1 | 1.0 | 82 | $6\times10^{09}$ | Existence |

**Claims**

1. An antireflection film for display comprising a transparent film, an adhesion layer having antistatic property provided thereon, a hard coat layer provided thereon and a low refractive index layer provided thereon, wherein the hard coat layer has refractive index of not less than 1.67, the transparent film has refractive index ($R_1$), the adhesion layer has refractive index ($R_2$) and the hard coat layer has refractive index ($R_3$), the refractive indices ($R_1$), ($R_2$) and ($R_3$) satisfying the following formula (I):

$$\left| R_2 - (R_1 + R_3)/2 \right| \leqq a \qquad (I)$$

in which "a" is real number of not more than 0.07.

2. An antireflection film for display as defined in claim 1, wherein the "a" of the formula (I) is real number of not more than 0.03.

3. An antireflection film for display as defined in claim 1 or 2, wherein the hard coat layer contains a fine particle composed of at least one oxide selected from zirconia, titania, selenium oxide and zinc oxide.

4. An antireflection film for display as defined in any of claims 1 to 3, wherein the hard coat layer has a thickness of 0.3 to 10$\mu$m.

5. An antireflection film for display as defined in any of claims 1 to 4, wherein the low refractive index layer is coated layer having a fine particle of oxide and/or a fine particle of fluororesin.

6. An antireflection film for display as defined in any of claims 1 to 5, wherein the difference between refractive index of the low refractive index layer and that of the hard coat layer is in the range of 0.20 to 0.60.

7. An antireflection film for display as defined in any of claims 1 to 6, wherein the adhesion layer contains an inorganic antistatic particle or an organic antistatic agent.

8. An antireflection film for display as defined in any of claims 1 to 7, wherein the adhesion layer contains an inorganic antistatic particle composed of at least one selected from antimony-doped tin oxide, tin-doped indium oxide, zinc antimonate and phosphorus-doped tin oxide.

9. An antireflection film for display as defined in any of claims 1 to 8, wherein the adhesion layer has a thickness of 60 to 200nm.

10. A display having the antireflection film for display as defined in any of claims 1 to 9 attached onto a glass plate for displaying image of the display.

# Fig. 1

## INTERNATIONAL SEARCH REPORT

| | International application No. |
|---|---|
| | PCT/JP2007/067095 |

A. CLASSIFICATION OF SUBJECT MATTER
*G02B1/11*(2006.01)i, *B32B7/02*(2006.01)i, *G09F9/00*(2006.01)i

According to International Patent Classification (IPC) or to both national classification and IPC

B. FIELDS SEARCHED

Minimum documentation searched (classification system followed by classification symbols)
G02B1/11, B32B7/02, G09F9/00

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-163752 A (Sekisui Chemical Co., Ltd.), 10 June, 2004 (10.06.04), Full text; all drawings (Family: none) | 1-10 |
| Y | JP 2001-115087 A (Nissan Chemical Industries, Ltd.), 24 April, 2001 (24.04.01), Full text (Family: none) | 1,3-6,10 |

| ☒ | Further documents are listed in the continuation of Box C. | ☐ | See patent family annex. |
|---|---|---|---|

| | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 December, 2007 (05.12.07) | 18 December, 2007 (18.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

16

**INTERNATIONAL SEARCH REPORT**

| International application No. |
|---|
| PCT/JP2007/067095 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-287102 A (Dainippon Printing Co., Ltd.), 31 October, 1995 (31.10.95), Full text; all drawings (particularly, Par. No. [0047]) & US 5909314 A   & US 6064524 A & EP 667541 A   & DE 69529433 D & KR 237255 B | 1 |
| Y | JP 2005-181545 A (Bridgestone Corp.), 07 July, 2005 (07.07.05), Full text; all drawings (particularly, Claims 2, 3) & WO 2005/059601 A1   & US 2006/0269731 A1 & EP 1701180 A   & JP 2005-181544 A | 1 |
| Y | JP 5-142401 A (Nippon Sheet Glass Co., Ltd.), 11 June, 1993 (11.06.93), Claim 1; Par. No. [0008] & EP 764857 A   & EP 518687 A & US 5496641 A   & DE 69221781 T & KR 267444 B | 1 |
| P,A | JP 2007-58178 A (Hitachi Maxell, Ltd.), 08 March, 2007 (08.03.07), Full text; all drawings (particularly, Claims 4, 6, 7; Par. No. [0034]) (Family: none) | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004163752 A